(19) Europäisches Patentamt
European Patent Office
Office européen des brevets

(11) Veröffentlichungsnummer: **0 304 739 B1**

(12) # EUROPÄISCHE PATENTSCHRIFT

(45) Veröffentlichungstag der Patentschrift: **22.04.92**

(51) Int. Cl.[5]: **C09D 183/06**

(21) Anmeldenummer: **88113113.0**

(22) Anmeldetag: **12.08.88**

(54) **Zubereitung zur abhäsiven Beschichtung von Backblechen, Backformen, Pfannen, Metalltöpfen und dergleichen.**

(30) Priorität: **26.08.87 DE 3728414**

(43) Veröffentlichungstag der Anmeldung:
**01.03.89 Patentblatt 89/09**

(45) Bekanntmachung des Hinweises auf die Patenterteilung:
**22.04.92 Patentblatt 92/17**

(84) Benannte Vertragsstaaten:
**AT BE CH DE ES FR GB IT LI NL**

(56) Entgegenhaltungen:
**EP-A- 0 017 958**
**EP-A- 0 092 701**

(73) Patentinhaber: **Th. Goldschmidt AG**
**Goldschmidtstrasse 100 Postfach 101461**
**W-4300 Essen 1(DE)**

(72) Erfinder: **Priesch, Manfred**
**Cäcilienhöhe 62**
**W-4350 Recklinghausen(DE)**
Erfinder: **Rau, Harald**
**Schmettaustrasse 11**
**W-4300 Essen(DE)**
Erfinder: **Weitemeyer, Christian, Dr.**
**Sundernholz 67**
**W-4300 Essen(DE)**

**EP 0 304 739 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Zubereitung zur abhäsiven Beschichtung von Backblechen, Backformen, Pfannen, Metalltöpfen und dergleichen, welche nach dem Einbrennen auf die Metalloberflächen der Back- und Kochgeräte verhindert, daß die in diesen Formen gebackenen, gekochten oder gebratenen, insbesondere zucker- oder fetthaltigen Nahrungsmittel ankleben und sich nicht von der Oberfläche der Behältnisse oder Bleche lösen.

Die Erfindung betrifft insbesondere eine Zubereitung zur abhäsiven Beschichtung, welche überwiegend aus hitzehärtbarem, mit Polyolen modifiziertem Polysiloxan A und, bezogen auf Polysiloxan A, 0,05 bis 4 Gew.-% eines mit diesem reaktiven linearen Siloxan B besteht, wobei das modifizierte Polysiloxan A durch Umsetzung eines Polysiloxans A1 der allgemeinen Formel

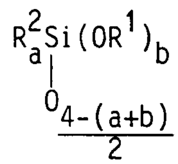

($OR^1$ = Alkoxygruppe, abgeleitet von primärem oder sekundärem Alkohol mit 1 bis 4 Kohlenstoffatomen,
$R^2$ = Alkyl- und/oder Phenylrest,
a = 1 bis 1,5,
b = 0,1 bis 0,8)

mit einem mehrwertigen Alkohol A2 erhältlich ist, wobei die Umsetzung in einem solchen Mengenverhältnis durchgeführt wird, daß einer $SiOR^1$-Gruppe etwa eine COH-Gruppe entspricht und die Umsetzung bei einem Umsetzungsrad von 25 bis 90 % abgebrochen wird, und das reaktive lineare Polysiloxan B der allgemeinen Formel

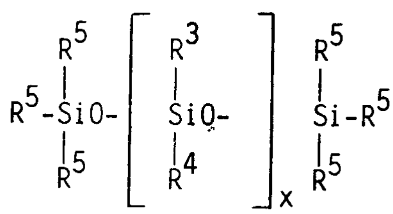

($R^3$, $R^4$ gleich oder verschieden, Methyl- oder Phenylreste, wobei aber mindestens 80 Mol-% dieser Reste Methylreste sind,
$R^5$ gleich oder verschieden, Alkylreste mit 1 bis 4 Kohlenstoffatomen und/oder Phenylreste und/oder zur Reaktion mit den $SiOR^1$- bzw. COH-Gruppen des modifizierten Polysiloxans A befähigte Gruppen, wobei mindestens ein Rest $R^5$ eine solche reaktionsfähige Gruppe ist.
x $\geq 0$)

entspricht.

Die Erfindung betrifft insbesondere eine Zubereitung der vorgenannten Art, welche für mechanisch stark beanspruchte Back- und Kochgeräte besonders geeignet ist und nach dem Einbrennen Beschichtungen ergibt, die hohe Härte aufweisen. Diese hohe Härte soll auch bei Temperaturen, wie sie z.B. beim Braten auftreten, d.h. bei Temperaturen von etwa 180 °C und höher, erhalten bleiben.

In der europäischen Patentschrift 0 017 958 ist eine Zubereitung zur abhäsiven Beschichtung von Back- und Kochgeräten beschrieben, welche überwiegend aus hitzehärtbaren Polysiloxanharzen und mit diesen reaktiven linearen Siloxanen besteht. Dieses Gemisch aus hitzehärtbarem Polysiloxanharz und reaktivem linearen Polysiloxan wird zweckmäßig in Gegenwart üblicher Härtungskatalysatoren bei etwa 200 bis 300 °C auf die Oberfläche des Metalles eingebrannt.

Als hitzehärtbares Siloxanharz kann ein Polymeres verwendet werden, welches dadurch erhältlich ist, daß man Siloxane der allgemeinen Formel

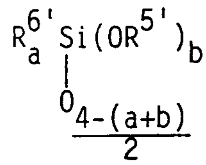

worin

$OR^{5'}$ eine Alkoxygruppe von primären oder sekundären aliphatischen Alkoholen mit 1 bis 4 C-Atomen,

$R^{6'}$ ein Alkyl- und/oder Phenylrest ist,

a einen Wert von 1,0 bis 1,5

b einen Wert von 0,1 bis 0,7 hat,

mit niedermolekularen mehrwertigen Alkohholen bei Temperaturen von 100 bis 160 °C gegebenenfalls in Gegenwart an sich bekannter Umesterungskatalysatoren und Lösungsmittel unter Entfernung des Alkohols $R^{5'}$ OH in einem solchen Mengenverhältnis miteinander umsetzt, daß einer $SiOR^{5'}$-Gruppe etwa eine COH-Gruppe entspricht, wobei man die Reaktion bei einem Umsetzungsgrad von 25 bis 80 % durch Abkühlen auf eine Temperatur < 100 °C abbricht.

Als reaktives lineares Polysiloxan wird ein solches der Formel

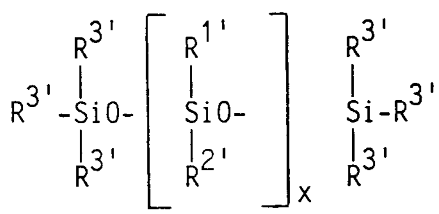

verwendet, wobei

$R^{1'}$, $R^{2'}$ gleich oder verschieden sind und einen Methyl- oder Phenylrest mit der Maßgabe bedeuten, daß mindestens 80 Mol-% dieser Reste Methylreste sind,

die Reste $R^{3'}$ gleich oder verschieden sind und die Bedeutung eines Restes oder mehrerer Reste aus der Gruppe

a) Alkylreste mit 1 bis 4 Kohlenstoffatomen,

b) Phenylreste,

c) zur Reaktion mit den kondensationsfähigen Gruppen des härtbaren Polysiloxanharzes befähigte Reste haben,

wobei mindestens 1 Rest $R^{3'}$ die Bedeutung c) hat,

x = 0 oder eine ganze Zahl > 0 ist.

Dabei ist das reaktive lineare Polysiloxan in der Zubereitung in einer Menge von 0,05 bis 4 Gew.-%, bezogen auf das mit niederen mehrwertigen Alkoholen modifizierte Siloxanharz, enthalten.

Die mit den Zubereitungen der EU-PS 0 017 958 erhaltenen Oberflächenschichten zeigen die gewünschte Abhäsivität. Sie können bereits bei verhältnismäßig niedrigen Temperaturen (200 °C) eingebrannt werden. Ihre Thermoplastizität ist, verglichen mit den aus dem Stand der Technik damals bekannten Harzen, gering. Diese Zubereitungen sind insbesondere zur Beschichtung von Backformen gut geeignet, die mechanisch in der Regel nur wenig beansprucht werden. Einer wesentlich höheren mechanischen Beanspruchung sind jedoch Pfannen und Töpfe ausgesetzt, die zum Braten und Kochen verwendet werden. Außerdem werden beim Braten durch heißes Fett oder Öl häufig höhere Temperaturen als beim Backen erreicht.

Der vorliegenden Erfindung liegt die Aufgabe zugrunde, Zubereitungen zu finden, welche nach dem Einbrennen auf der Metalloberfläche abhäsive Oberflächenschichten mit einer höheren Härte, als dies nach dem Stand der Technik möglich ist, ausbilden. Die höhere Härte soll insbesondere bei Temperaturen von 200 °C und darüber erhalten bleiben. Diese sogenannte Heißhärte ist für den Gebrauchswert der beschichteten Gegenstände von besonderer Bedeutung. Die Heißhärte darf sich auch bei häufigen Temperaturwechseln, denen die beschichteten Gegenstände ausgesetzt sind, nicht vermindern. Die Beschichtungen sollen eine hohe mechanische Festigkeit bei gutem Verbund mit dem metallischen Untergrund aufweisen. Zu geringe mechanische Festigkeit ist ein bekannter Nachteil der mit Polytetrafluorethylen beschichteten Gegenstände. Die Beschichtungen sollen ferner bei unbeabsichtigtem Überhitzen der beschichteten Pfannen und Töpfe keine physiologisch bendenklichen Spaltprodukte entwickeln.

Aus der veröffentlichten britischen Patentanmeldung 2 152 946 sind abhäsive Überzüge bekannt, die durch Einbrennen eines Siliconpolyesterharzes erhalten werden, wobei erfindungswesentlich der Zusatz von 20 bis 200 Gew.-Teilen eines blättchenförmigen Feststoffes, vorzugsweise Glimmer, zu 100 Gew.-Teilen des härtbaren Siliconpolyesterharzes ist. Sicher werden hierdurch bestimmte physikalische Eigenschaften der ausgehärteten Oberflächenschicht verbessert, z.B. deren Härte erhöht und deren Permeabilität verringert. Jedoch sind diesen Verbesserungen durch die Basiseigenschaften des Harzes Grenzen gesetzt. Es ist deshalb vielmehr anzustreben, die Verbesserung der Eigenschaften der aus gehärteten Oberflächenschicht durch eine Verbesserung des Beschichtungsharzes selbst zu erreichen.

Gegenstand vorliegender Erfindung sind deshalb Zubereitungen der eingangs genannten Art, bei denen das Polysiloxanharz in besonderer Weise modifiziert ist, um die gewünschte Eigenschaftskombination zu erzielen.

Die erfindungsgemäße Zubereitung, welche aus mit Polyolen modifiziertem Polysiloxan A und reaktivem linearen Polysiloxan B besteht, ist dadurch gekennzeichnet, daß man zur Modifikation des Polysiloxans A1 als mehrwertigen Alkohol A2 ein Estergruppen enthaltendes Polyol der allgemeinen Formel

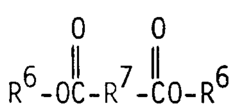 I

erhältlich durch Veresterung von 1 Mol Dicarbonsäure HOOC-$R^7$-COOH mit 2 Mol Alkohol der Formel $R^6$OH, wobei die Reste $R^6$ im Molekül gleich oder verschieden sind und die Gruppe

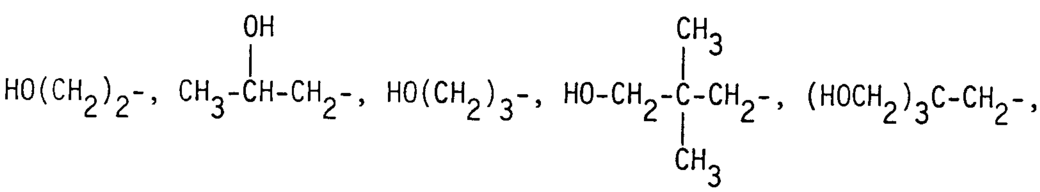

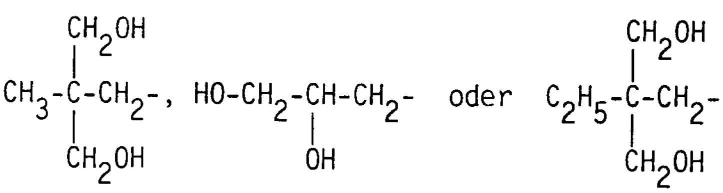 bedeuten, in der

$R^7$ eine Alkylen-, Cycloalkylen- oder Phenylengruppe ist und wobei das Estergruppen enthaltende Polyol mindestens drei Hydroxylgruppen aufweisen muß,

verwendet.

Bevorzugt sind als $R^6$-Reste die Reste

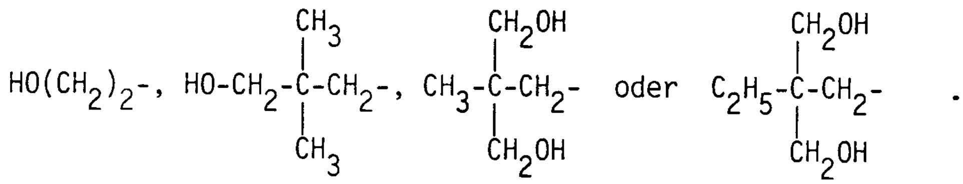

Als $R^7$-Rest ist der Phenylenrest bevorzugt.

Die Formel I, durch welche das Estergruppen aufweisende Polyol beschrieben wird, ist als durchschnittliche Formel anzusehen. Bei der Veresterung von 2 Mol $R^6OH$ mit 1 Mol Dicarbonsäure entstehen in gewissem Umfang auch oligomere Polyesterpolyole, d.h. Verbindungen, bei denen die Dicarbonsäureeinheit mehr als einmal enthalten ist. Diese Verbindungen müssen nicht aus dem Gemisch abgetrennt werden. Die Herstellung der Estergruppen aufweisenden Polyole ist dem Fachmann geläufig.

Es können die üblichen Veresterungskatalysatoren zur Beschleunigung der Reaktion eingesetzt werden. Hierzu wird zum Stand der Technik auf die EU-PS 0 092 701 verwiesen.

Besonders bevorzugte Esterpolyole der allgemeinen Formel I sind:

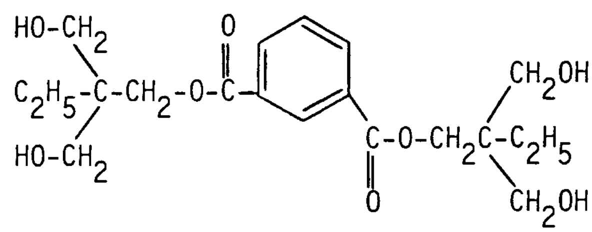

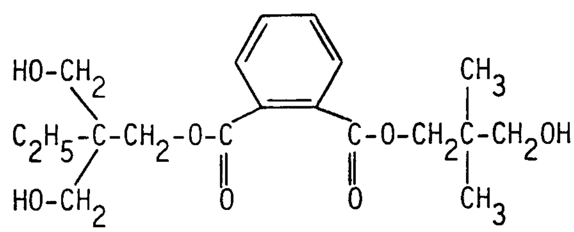

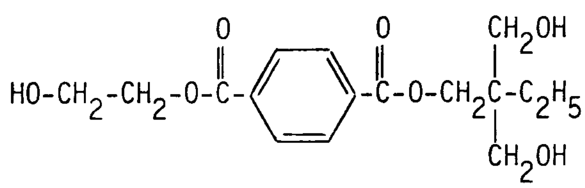

Die Umsetzung des Polysiloxans A1 mit dem Polyesterpolyol der Formel I erfolgt in einem solchen Mengenverhältnis, daß einer $SiOR^1$-Gruppe etwa eine COH-Gruppe entspricht. Der Quotient $SiOR^1$ : COH kann dabei innerhalb der Grenzen von 0,8 bis 1,2 liegen. Bevorzugt ist jedoch ein Quotient von 1.

Die Umsetzung der Reaktionspartner wird bei einem Umsetzungsgrad von 25 bis 90 % abgebrochen. Es hat sich dabei herausgestellt, daß ein hoher Umsetzungsgrad die Umsetzung des erhaltenen modifizierten Polysiloxans A mit dem reaktiven linearen Polysiloxan B erleichtert. Bevorzugt ist es deshalb, die Umsetzung des Polysiloxans A1 mit dem Polyesterpolyol A2 bis zu einem Umsetzungsgrad von 50 bis 80 % durchzuführen. Das modifizierte Polysiloxan A ist trotz des hohen Umsetzungsgrades relativ niedrigviskos und deshalb gut handhabbar.

Das Polysiloxan A1 und das reaktive lineare Polysiloxan B sind aus dem Stand der Technik bekannte Produkte und z.B. in der EU-PS 0 017 958 beschrieben.

Im Polysiloxan A1 der allgemeinen Formel

$$R^2_a Si(OR^1)_b O_{\frac{4-(a+b)}{2}}$$

ist $OR^1$ vorzugsweise eine $OC_2H_5$-Gruppe. $R^2$ ist bevorzugt die Methyl- und/oder Phenylgruppe. Der Index a hat den Wert 1 bis 1,5, vorzugsweise 1,1 bis 1,4. Der Index b hat einen Wert von 0,1 bis 0,8, vorzugsweise von 0,3 bis 0,7.

Im linearen Siloxan B der allgemeinen Formel

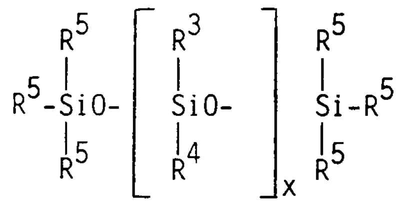

sind $R^3$ und $R^4$ vorzugsweise Methylreste, wobei bis zu 20 Mol-% der Methylreste durch Phenylreste ersetzt sein können. Auch $R^5$ kann diese Bedeutung annehmen, jedoch muß mindestens ein Rest $R^5$ zur Reaktion mit einer $SiOR^1$- oder COH-Gruppe befähigt sein. Eine solche reaktive Gruppe ist die Cl-, HO-, LiO- oder $R^8O$-Gruppe, wobei $R^8$ ein niederer Alkylrest mit 1 bis 4 Kohlenstoffatomen oder ein Acylrest ist. Vorzugsweise ist $R^8$ ein Methyl-, Ethyl- oder Acetylrest. Es genügt bereits, wenn eine Gruppe $R^5$ zur Reaktion mit der $SiOR^1$- oder COH-Gruppe befähigt ist. Es kann jedoch auch mehr als eine Gruppe $R^5$, z.B. zwei, drei oder alle Gruppen $R^5$, zur Reaktion befähigt sein.

Der Index x kann O sein, jedoch ist er vorzugsweise > O und hat insbesondere einen Wert von 10 bis 500, besonders bevorzugt einen Wert von 15 bis 150.

Beispiele solcher Polysiloxane B sind

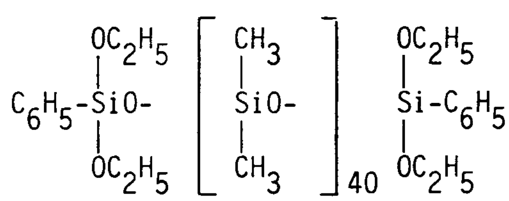

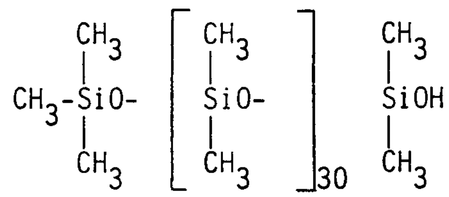

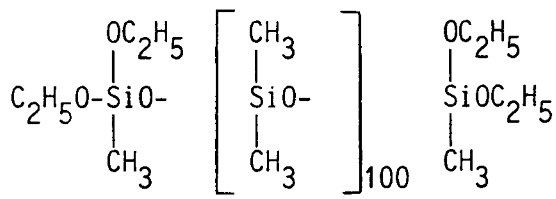

Der erfindungsgemäßen Zubereitung kann man in an sich bekannter Weise Härter, wie z.B. Butyltitanat oder Zinnoctoat, Pigmente und Füllstoffe, wie z.B. Titanoxid oder Ruß, sowie Netz- und Verlaufmittel, wie z.B. Lecithin oder Ethylcellulose, in üblichen Mengen zusetzen.

Die Zubereitungen werden auf den zu beschichtenden Untergrund aufgespritzt, aufgerakelt, aufgestrichen oder getaucht und dann eingebrannt, wobei sich die Einbrenntemperatur nach der Art des Harzes und des gegebenenfalls zugesetzten Katalysators richtet. Man erzielt auf diese Weise eine Beschichtung mit einer Schichtdicke von etwa 10 bis 40 µm.

Der Gegenstand der vorliegenden Erfindung soll im folgenden durch die Beispiele näher erläutert werden.

1.1 Herstellung eines Polyesterpolyols A2 A2-I

166 g Isophthalsäure und 268 g 2,2-Di(hydroxymethyl)-butan(1)ol (Trimethylolpropan) werden mit 100 g Xylol auf 120 °C erwärmt. Es werden dann, 0,3 g hypophosphorige Säure zugesetzt. Die Temperatur wird inner halb von 3 Stunden auf 190 °C gesteigert. Das entstehende Wasser wird azeotrop mit dem Xylol abdestilliert. Nach Erreichen einer Säurezahl von 70 bis 100 wird zum Austreiben des Wassers Stickstoff eingeleitet. Die Temperatur wird innerhalb von 3 Stunden auf 220 °C erhöht. Die Reaktion wird bei Erreichen einer Säurezahl < 5 beendet. Das angefallene Destillat besteht aus 36 g Wasser und 100 g Xylol. Die OH-Zahl des Produktes beträgt 560 mg KOH/g Substanz.

1.2 Herstellung eines Polyesterpolyols A2 A2-II

148 g Phthalsäureanhydrid und 62 g Ethylenglykol werden auf 145 °C erwärmt. Bei dieser Temperatur wird gerührt, bis die Säurezahl auf 267 gefallen ist. Nun werden 134 g Trimethylolpropan zugegeben. Unter Einleiten von Stickstoff wird in 4 Stunden auf 220 °C weiter aufgeheizt. Nach Erreichen einer Säurezahl < 5 wird die Reaktion beendet. Die Destillatmenge beträgt 18 g. Die OH-Zahl des Produktes beträgt 515 mg KOH/g Substanz.

2.1 Herstellung des modifizierten Polysiloxans A A--I

1000 g eines Alkoxypolysiloxans A1 der Formel

$$(C_6H_5)_{0,45}(CH_3)_{0,65}-\underset{\underset{O_{1,31}}{|}}{Si}-(OC_2H_5)_{0,28}$$

Gehalt an $-OC_2H_5$-Gruppen = 11,9 Gew.-%

263 g des Polyesterpolyols A2-I, 381 g Diethylenglykoldimethylether, 761 g Xylol und 0,2 g Butyltitanat werden in einer Destillationsapparatur vorgelegt und unter Rühren aufgeheizt. Die Reaktion beginnt bei 135 °C. Nachdem 73 g Ethanol abdestilliert sind, wird der Ansatz gekühlt. Die Ethanolmenge entspricht einem Umsatz von 60 %. Der Einbrennrückstand des Produktes nach 1 Stunde bei 180 °C beträgt 50 %. Das Produkt hat eine Viskosität von 250 $mm^2/s$.

2.2 Herstellung des modifizierten Polysiloxans A A--II

1000 g eines Alkoxypolysiloxans A1 der Formel

$$(C_6H_5)_{0,66}(CH_3)_{0,66}-\underset{\underset{O_{1,14}}{|}}{Si}-(OC_2H_5)_{0,40}$$

Gehalt an $-OC_2H_5$-Gruppen = 14,4 Gew.-%
318 g des Polyesterpolyols A2-II, 1171 g Methylisoamylketon und 0,2 g Butyltitanat werden in einer Destillationsapparatur vorgelegt und unter Rühren aufgeheizt. Die Reaktion beginnt bei 140 ° C. Nachdem 96 g Ethanol abdestilliert sind, wird der Ansatz gekühlt. Die Ethanolmenge entspricht einem Umsatz von 65 %. Der Einbrennrückstand des Produktes beträgt 50 %. Das Produkt hat eine Viskosität von 120 $mm^2/s$.

3.1 Herstellung einer erfindungsgemäßen Zubereitung Z--I

100 g modifiziertes Siloxanharz A--I werden mit 0,4 Gew.-Teilen des Siloxans B--I der Formel

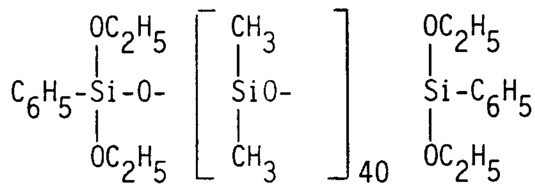

vermischt und unter Rühren mit 0,5 Gew.-Teilen $(BuO)_4$-Ti-Katalysator versetzt.

3.2 Herstellung einer erfindungsgemäßen Zubereitung Z--II

100 g modifiziertes Siloxanharz A--II werden mit 0,2 Gew.-Teilen des Siloxans B--II der Formel

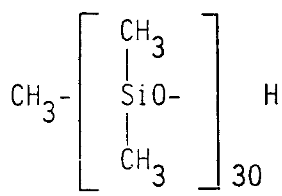

vermischt und unter Rühren mit 0,5 Gew.-Teilen $(BuO)_4$-Ti-Katalysator versetzt.

Anwendungstechnische Prüfung der erfindungsgemäßen Zubereitungen Z--I und Z--II

Je 100 g der Zubereitungen Z--I und Z--II werden mit 50 g Titandioxid pigmentiert. Die Lacke werden mit einer Rakel auf Aluminiumprüfbleche (Bonder 1401 Al) aufgebracht und nach einer Ablüftzeit von 15 Minuten in einem Umluftofen 10 Minuten bei 270 ° C ausgehärtet. Die Schichtdicke beträgt 30 bis 35 $\mu$m.

Es werden folgende Prüfungen durchgeführt:

1. Bleistifthärte nach ECCA-Norm T4-ISO 3270-ASTM D 3363
2. Gitterschnittprüfung nach DIN 53151 ISO 2409
3. Öltest:
Das beschichtete Prüfblech wird bei 200 ° C 3 Stunden in Olivenöl gelagert. Es wird dann der Gitterschnitt-Test durchgeführt und die Bleistifthärte bestimmt.
4. Steamtest:
Ein beschichtetes Blech wird 2 cm über dem Ausguß eines kleinen Wasserkessels (Ø des Ausgusses 1,7 cm) so befestigt, daß der Wasserdampf auf die beschichtete Fläche trifft und kondensiert. Die Dauer der Prüfung beträgt 10 Minuten. Dabei verdampfen etwa 140 bis 150 g Wasser. Danach werden auf der beschichteten Fläche mit einem groben Leinenstoff (cheese cloth), der 7mal gefaltet ist, Doppelhübe ohne Druck ausgeführt. Gemessen wird, nach wieviel Doppelhüben die bedampfte Fläche stumpf wird.
5. Spiegeleiertest:
Ein Spiegelei wird auf dem beschichteten Blech gebraten. Es werden die Trennung des Spiegeleies, die Haftung von Rückständen an dem beschichteten Blech sowie gegebenenfalls Verfärbungen der Beschichtung beurteilt.
6. Zuckertest:

Auf dem beschichteten Blech wird Zucker so lange erhitzt, bis er flüssig und leicht braun geworden ist. Dann wird die Zuckerschmelze abgekühlt, bis sie erstarrt und mit einem Spatel vom beschichteten Blech geschoben. Beurteilt wird die Menge der verbleibenden Rückstände und gegebenenfalls eine Verfärbung der Beschichtung.

7. Kondensmilchtest:

Kondensmilch wird auf dem beschichteten Blech so lange erhitzt, bis das Wasser aus der Milch verdampft ist. Dann wird das Blech auf Raumtemperatur abgekühlt und die Haftung der Rückstände und eine etwaige Verfärbung der Beschichtung beurteilt.

8. Essigsäuretest:

Ein beschichtetes Blech wird 1 Stunde bei 50 °C in 5 %iger Essigsäure gelagert. Danach wird der Gitterschnitt beurteilt.

9. Ketchuptest:

Ein beschichtetes Blech wird 3 Stunden in einer auf 100 °C erwärmten Ketchup-Lösung gelagert. Danach wird die Haftung und eine etwaige Verfärbung beurteilt.

Zusammensetzung der Lösung:

Ketchup 600 g

Lösung von NaCl in Wasser 600 g

Paprika 5 g

Pfeffer 5 g

Die Ergebnisse der anwendungstechnischen Prüfung sind in der folgenden Tabelle zusammengefaßt. Zum Vergleich wird analog eine Beschichtung des Standes der Technik geprüft. Diese Beschichtung ist wie folgt zusammengesetzt:

100 g einer Zubereitung aus einem Polysiloxanharz, umgesetzt mit einem Gemisch aus Trimethylolpropan und Ethylenglykol, mit dem obengenannten Polysiloxan B--II (gemäß Beispiel 4 der europäischen Patentschrift 0 017 958) werden mit 50 g Titandioxid pigmentiert. Der Lack wird mit einer Rakel auf Aluminiumprüfbleche (Bonder 1401 Al) aufgebracht und nach einer Ablüftzeit von 15 Minuten in einem Umluftofen 10 Minuten bei 270 °C ausgehärtet. Die Schichtdicke beträgt 32 µm.

| | Beschichtung | | |
|---|---|---|---|
| | Z--I | Z--II | Vergleich |
| Bleistifthärte | | | |
| bei Raumtemperatur | 5 H | 5 H | H |
| bei 150°C | 4 H | 3 H | HB |
| bei 200°C | 4 H | 3 H | 2 B |
| Gitterschnitt | GT 0 | GT 0 | GT 0 |
| Steamtest | > 200 | 180 | 120 |
| Zuckertest | gute Trennung | gute Trennung | gute Trennung leicht brauner Fleck |
| Kondensmilchtest | gute Trennung | gute Trennung | gute Trennung |
| Spiegeleitest | gute Trennung | gute Trennung | gute Trennung leichte Verfärbung |
| Öltest 3 h, 200°C | | | |
| Bleistifthärte | | | |
| bei 20°C | 5 H | 4 H | B |
| Gitterschnitt | GT 1 | GT 0 | GT 1 |
| Essigsäuretest | | | |
| Gitterschnitt | GT 0 | GT 0 | GT 0 |
| Ketchuptest | | | |
| Gitterschnitt | GT 0 | GT 0 | GT 1 |
| Farbe | leicht gelb | leicht gelb | leicht rot |

Die Ergebnisse zeigen deutlich, daß die Beschichtungen, die aus den erfindungsgemäßen Zubereitungen hergestellt wurden, ausgezeichnete Abhäsivität und Härte auch bei hohen Temperaturen aufweisen und daher für die angegebenen Verwendungszwecke hervorragend verwendbar sind. Das Vergleichsbeispiel zeigt, daß nach dem bisherigen Stand der Technik vor allem bei hohen Temperaturen eine vergleichbare Ölfestigkeit und Widerstandsfähigkeit gegen mechanische Belastung nicht zu erreichen waren.

**Patentansprüche**
**Patentansprüche für folgende Vertragsstaaten : AT, BE, CH, DE, FR, GB, IT, LI, NL**

1. Zubereitung zur abhäsiven Beschichtung von Backblechen, Backformen, Pfannen, Metalltöpfen und dergleichen, welche überwiegend aus hitzehärtbarem, mit Polyolen modifiziertem Polysiloxan A und, bezogen auf Polysiloxan A, 0,05 bis 4 Gew.-% eines mit diesem reaktiven linearen Siloxan B besteht, wobei das modifizierte Polysiloxan A durch Umsetzung eines Polysiloxans A1 der allgemeinen Formel

$$R^2_a\underset{\displaystyle O_{\frac{4-(a+b)}{2}}}{\underset{|}{Si}}(OR^1)_b$$

| | |
|---|---|
| ($OR^1$ = | Alkoxygruppe, abgeleitet von primärem oder sekundärem Alkohol mit 1 bis 4 Kohlenstoffatomen, |
| $R^2$ = | Alkyl- und/oder Phenylrest, |
| a = | 1 bis 1,5, |
| b = | 0,1 bis 0,8) |

mit einem mehrwertigen Alkohol A2 erhältlich ist, wobei die Umsetzung in einem solchen Mengenverhältnis durchgeführt wird, daß einer $SiOR^1$-Gruppe etwa eine COH-Gruppe entspricht und die Umsetzung bei einem Umsetzungsgrad von 25 bis 90 % abgebrochen wird, und das reaktive lineare Polysiloxan B der allgemeinen Formel

$$R^5-\overset{R^5}{\underset{R^5}{Si}}O-\left[\overset{R^3}{\underset{R^4}{Si}}O-\right]_x\overset{R^5}{\underset{R^5}{Si}}-R^5$$

| | |
|---|---|
| ($R^3$, $R^4$ | gleich oder verschieden, Methyl- oder Phenylreste, wobei aber mindestens 80 Mol-% dieser Reste Methylreste sind, |
| $R^5$ | gleich oder verschieden, Alkylreste mit 1 bis 4 Kohlenstoffatomen und/oder Phenylreste und/oder zur Reaktion mit den $SiOR^1$- bzw. COH-Gruppen des modifizierten Polysiloxans A befähigte Gruppen, wobei mindestens ein Rest $R^5$ eine solche reaktionsfähige Gruppe ist, |
| x | $\geqq 0$) |

entspricht, dadurch gekennzeichnet, daß man als mehrwertigen Alkohol A2 ein Estergruppen enthaltendes Polyol der allgemeinen Formel

$$R^6-O\overset{\overset{O}{\|}}{C}-R^7-\overset{\overset{O}{\|}}{C}O-R^6$$

erhältlich durch Veresterung von 1 Mol Dicarbonsäure $HOOC-R^7-COOH$ mit 2 Mol Alkohol der Formel $R^6OH$, wobei die $R^6$-Reste im Molekül gleich oder verschieden sind und die Gruppe

$HO(CH_2)_2-$, 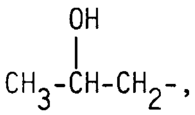, $HO(CH_2)_3-$, 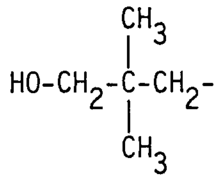, $(HOCH_2)_3C-CH_2-$,

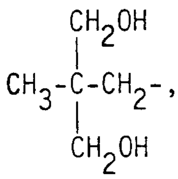, 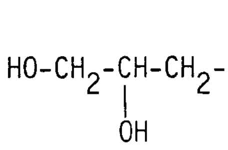 oder 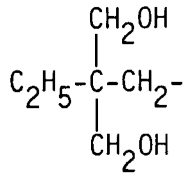 bedeuten, in der

$R^7$ eine Alkylen-, Cycloalkylen- oder Phenylengruppe ist und wobei das Estergruppen enthaltende Polyol mindestens drei Hydroxylgruppen aufweisen muß,

verwendet.

**2.** Zubereitung nach Anspruch 1, dadurch gekennzeichnet, daß die Reste

$R^1$ Ethylreste,

$R^2$ Methyl- und/oder Phenylreste,

$R^6$ $HO(CH_2)_2-$, 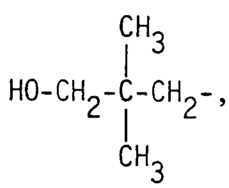, 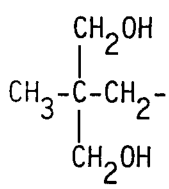 oder 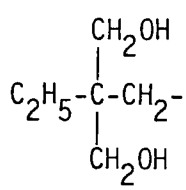-Reste,

$R^7$ Phenylenreste

sind.

**Patentansprüche für folgenden Vertragsstaat : ES**

**1.** Verfahren zur abhäsiven Beschichtung von Backblechen, Backformen, Pfannen, Metalltöpfen und dergleichen mit einer Zubereitung, welche überwiegend aus hitzehärtbarem, mit Polyolen modifiziertem Polysiloxan A und, bezogen auf Polysiloxan A, 0,05 bis 4 Gew.-% eines mit diesem reaktiven linearen Siloxan B besteht, wobei das modifizierte Polysiloxan A durch Umsetzung eines Polysiloxans A1 der allgemeinen Formel

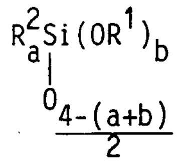

($OR^1$ = Alkoxygruppe, abgeleitet von primärem oder sekundärem Alkohol mit 1 bis 4 Kohlenstoffatomen,

$R^2$ = Alkyl- und/oder Phenylrest,

a = 1 bis 1,5,
b = 0,1 bis 0,8)

mit einem mehrwertigen Alkohol A2 erhältlich ist, wobei die Umsetzung in einem solchen Mengenverhältnis durchgeführt wird, daß einer $SiOR^1$-Gruppe etwa eine COH-Gruppe entspricht und die Umsetzung bei einem Umsetzungsgrad von 25 bis 90 % abgebrochen wird, und das reaktive lineare Polysiloxan B der allgemeinen Formel

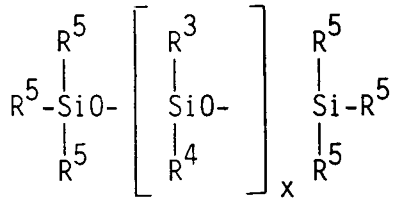

($R^3$, $R^4$ gleich oder verschieden, Methyl- oder Phenylreste, wo bei aber mindestens 80 Mol-% dieser Reste Methylreste sind,

$R^5$ gleich oder verschieden, Alkylreste mit 1 bis 4 Kohlenstoffatomen und/oder Phenylreste und/oder zur Reaktion mit den $SiOR^1$- bzw. COH-Gruppen des modifizierten Polysiloxans A befähigte Gruppen, wobei mindestens ein Rest $R^5$ eine solche reaktionsfähige Gruppe ist,

x $\geqq 0$)

entspricht, dadurch gekennzeichnet, daß man als mehrwertigen Alkohol A2 ein Estergruppen enthaltendes Polyol der allgemeinen Formel

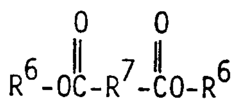

erhältlich durch Veresterung von 1 Mol Dicarbonsäure $HOOC-R^7-COOH$ mit 2 Mol Alkohol der Formel $R^6OH$, wobei die $R^6$-Reste im Molekül gleich oder verschieden sind und die Gruppe

$HO(CH_2)_2-$, 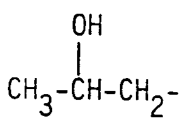, $HO(CH_2)_3-$, 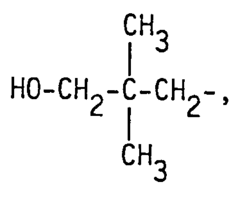, $(HOCH_2)_3C-CH_2-$,

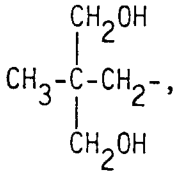, 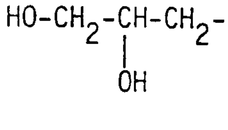 oder 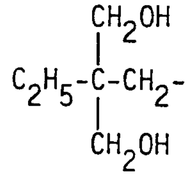 bedeuten, in der

$R^7$ eine Alkylen-, Cycloalkylen- oder Phenylengruppe ist und wobei das Estergruppen enthaltende Polyol mindestens drei Hydroxylgruppen aufweisen muß,

verwendet.

2. Verfahren nach Anspruch 1, dadurch gekennzeichnet, daß man eine Zubereitung verwendet, in welcher die Reste

$R^1$ Ethylreste,

$R^2$ Methyl- und/oder Phenylreste,

$R^6$ 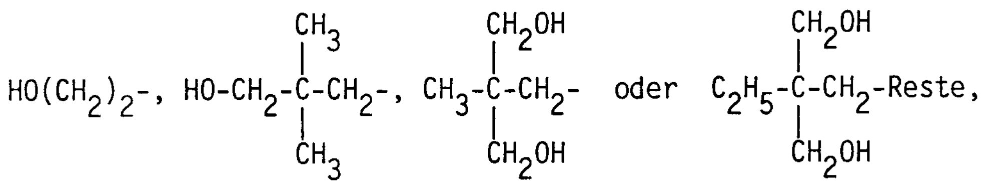 oder

$R^7$ Phenylenreste

sind.

## Claims

### Claims for the following Contracting States : AT, BE, CH, DE, FR, GB, IT, LI, NL

1. Preparation for the non-stick coating of baking sheets, baking tins, pans, metal saucepans and the like, which comprises predominantly heat-curable, polyolmodified polysiloxane A and, based on polysiloxane A, from 0.05 to 4 % by weight of a linear siloxane B which is reactive therewith, the modified polysiloxane A being obtainable by reacting a polysiloxane A1 of the general formula

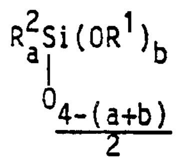

($OR^1$ is an alkoxy group derived from a primary or secondary alcohol having 1 to 4 carbon atoms,

$R^2$ is an alkyl and/or phenyl radical,

a is from 1 to 1.5 and

b is from 0.1 to 0.8)

with a polyhydric alcohol A2, the reaction being carried out in such a mixing ratio that approximately one COH group corresponds to one $SiOR^1$ group, and the reaction being terminated at a degree of conversion of from 25 to 90 %, and the reactive linear polysiloxane B conforming to the general formula

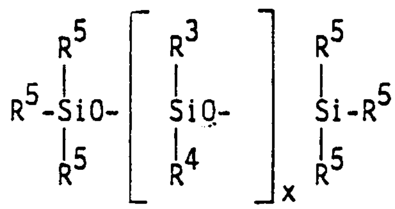

($R^3$ and $R^4$ are identical or different methyl or phenyl radicals, but at least 80 mol% of these radicals being methyl radicals,

$R^5$ are identical or different alkyl radicals having 1 to 4 carbon atoms and/or phenyl radicals and/or groups which are capable of reacting with the $SiOR^1$ or COH groups of the modified polysiloxane A, at least one radical $R^5$ being a reactive group of this type, and

x is $\geq$ 0),

characterised in that the polyhydric alcohol A2 used is an ester group-containing polyol of the general formula

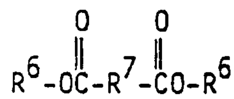

obtainable by esterifying 1 mol of dicarboxylic acid $HOOC-R^7-COOH$ using 2 mol of alcohol of the formula $R^6OH$ where the $R^6$ radicals in the molecule are identical or different and are the

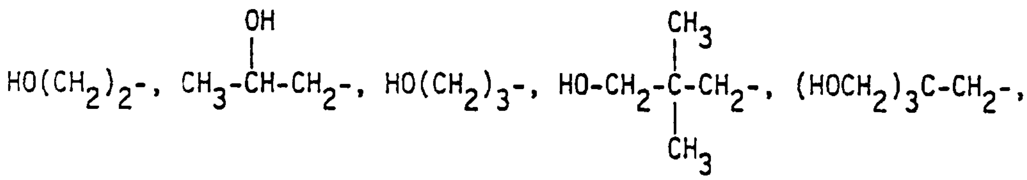

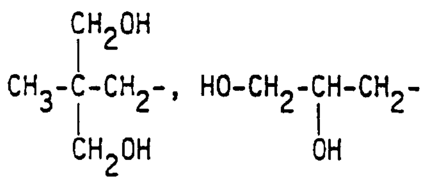

or

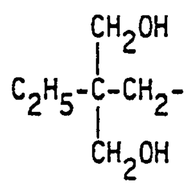

group

in which

$R^7$ is an alkylene, cycloalkylene or phenylene group, and where the ester group-containing polyol must contain at least three hydroxyl groups.

**2.** Preparation according to Claim 1, characterised in that the radicals

- $R^1$ are ethyl radicals,
- $R^2$ are methyl and/or phenyl radicals,

$R^6$ are $HO(CH_2)_2-$, 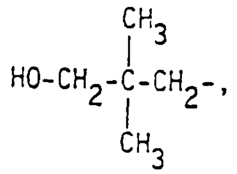, 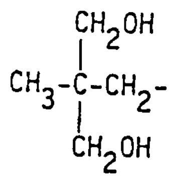 or

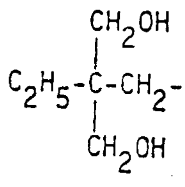 radicals, and

$R^7$ are phenylene radicals.

**Claims for the following Contracting State : ES**

**1.** Process for the non-stick coating of baking sheets, baking tins, pans, metal saucepans and the like using a preparation, which comprises predominantly heat-curable, polyol-modified polysiloxane A and, based on polysiloxane A, from 0.05 to 4 % by weight of a linear siloxane B which is reactive therewith, the modified polysiloxane A being obtainable by reacting a polysiloxane A1 of the general formula

$$R^2_a Si(OR^1)_b O_{\frac{4-(a+b)}{2}}$$

($OR^1$ is an alkoxy group derived from a primary or secondary alcohol having 1 to 4 carbon atoms,
$R^2$ is an alkyl and/or phenyl radical,
a is from 1 to 1.5 and
b is from 0.1 to 0.8)

with a polyhydric alcohol A2, the reaction being carried out in such a mixing ratio that approximately one COH group corresponds to one $SiOR^1$ group, and the reaction being terminated at a degree of conversion of from 25 to 90 %, and the reactive linear polysiloxane B conforming to the general formula

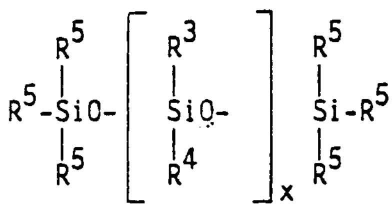

($R^3$ and $R^4$ are identical or different methyl or phenyl radicals, but at least 80 mol% of these radicals being methyl radicals,
$R^5$ are identical or different alkyl radicals having 1 to 4 carbon atoms and/or phenyl radicals and/or groups which are capable of reacting with the $SiOR^1$ or COH groups

of the modified polysiloxane A, at least one radical $R^5$ being a reactive group of this type, and

x is ≧ 0),

characterized in that the polyhydric alcohol A2 used is an ester group-containing polyol of the general formula

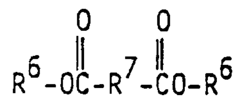

obtainable by esterifying 1 mol of dicarboxylic acid $HOOC\text{-}R^7\text{-}COOH$ using 2 mol of alcohol of the formula $R^6OH$ where the $R^6$ radicals in the molecule are identical or different and are the

$HO(CH_2)_2-$, 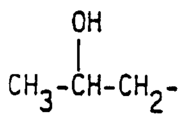, $HO(CH_2)_3-$, 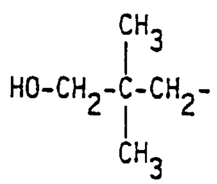, $(HOCH_2)_3C-CH_2-$,

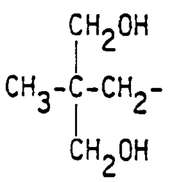, 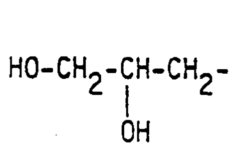 or 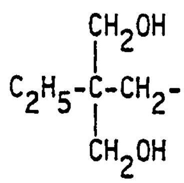 group

in which

$R^7$ is an alkylene, cycloalkylene or phenylene group, and where the ester group-containing polyol must contain at least three hydroxyl groups.

**2.** Process according to Claim 1, characterised in that a preparation is used, in which the radicals

$R^1$ are ethyl radicals,

$R^2$ are methyl and/or phenyl radicals,

$R^6$ are $HO(CH_2)_2-$, 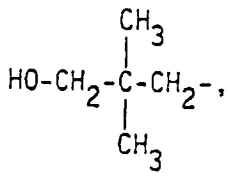, 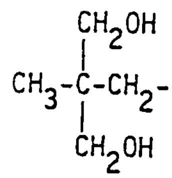 or

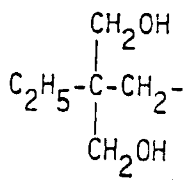 radicals, and

$R^7$ are phenylene radicals.

**Revendications**

**Revendications pour les Etats contractants suivants : AT, BE, CH, DE, FR, GB, IT, LI, NL**

**1.** Composition de revêtement anti-adhésif de plaques de four, de moules de cuisson, de poêles à frire, de marmites en métal et analogues, qui est formée essentiellement d'un polysiloxane A thermodurcissable modifié avec des polyols et, par rapport au polysiloxane A, 0,05 à 4 % en poids d'un siloxane linéaire B apte à réagir avec celui-ci, le polysiloxane modifié A pouvant être obtenu par la réaction d'un polysiloxane A1 répondant à la formule générale

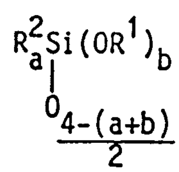

($OR^1$ = groupe alcoxy dérivé d'un alcool primaire ou secondaire comportant 1 à 4 atome(s) de carbone,
$R^5$ = reste alcoyle et/ou phényle,
a = 1 à 1,5,
b = 0,1 à 0,8),

avec un polyol A2, la réaction s'effectuant selon un rapport quantitatif tel qu'à un groupe $SiOR^1$ correspond à peu près un groupe COH et la réaction étant interrompue lors-qu'on atteint un taux de réaction de 25 à 90 %, et le poly-siloxane linéaire réactif B répond à la formule générale

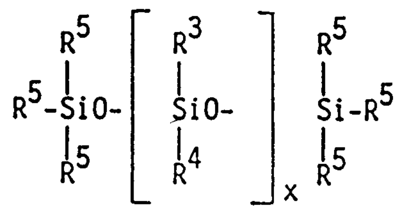

($R^3$, $R^4$ qui sont identiques ou différents, représentent un reste méthyle ou phényle, 80 % en moles de ces restes étant toutefois des restes méthyle,

$R^5$ qui sont identiques ou différents, représentent des restes alcoyle comportant 1 à 4 atome(s) de carbone et/ou des restes phényle et/ou des groupes capables de réagir avec les groupes $SiOR^1$ ou COH du polysiloxane modifié A, au moins un reste $R^5$ représentant un tel groupe capable de réagir,

x ≧ 0),

caractérisée en ce qu on utilise comme polyol A2, un polyol contenant des groupes esters, répondant à la formule générale

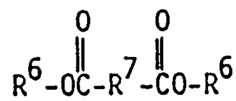

qu'on obtient par estérification d'1 mole d'acide dicarboxylique $HOOC-R^7-COOH$ avec 2 moles d'un alcool de formule $R^6OH$, les restes $R^6$ de la molécule étant identiques ou différents et représentant le groupe

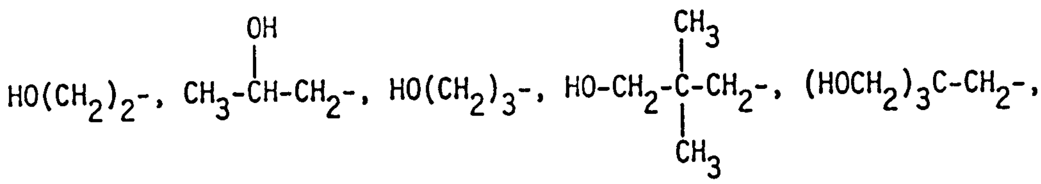

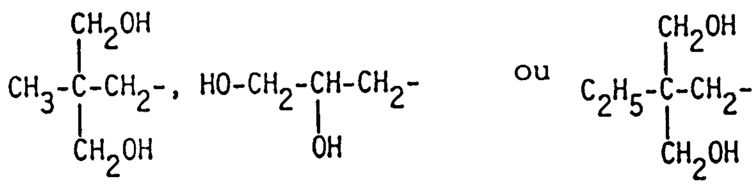

ou

formule dans laquelle

$R^7$ représente un groupe alcoylène, cycloalcoylène ou phénylène, et le polyol contenant des groupes esters doit comporter au moins trois groupes hydroxyles.

**2.** Composition selon la revendication 1, caractérisée en ce que les restes

$R^1$ sont des restes éthyle,

$R^2$ sont des restes méthyle et/ou éthyle,

$R^6$ sont des restes

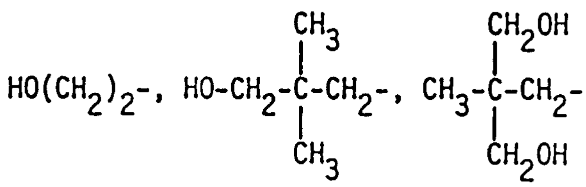

ou

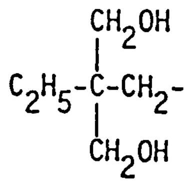

$R^7$ sont des restes phénylène.

**Revendications pour l'Etat contractant suivant : ES**

**1.** Procédé pour réaliser un revêtement anti-adhésif de plaques de four, de moules de cuisson, de poêles à frire, de marmites en métal et analogues, qui est formée essentiellement d'un polysiloxane A thermodurcissable modifié avec des polyols et, par rapport au polysiloxane A, 0,05 à 4 % en poids d'un siloxane linéaire B apte à réagir avec celui-ci, le polysiloxane modifié A pouvant être obtenu par la réaction d'un polysiloxane A1 répondant à la formule générale

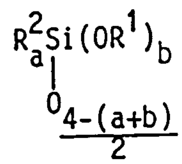

($OR^1$ = groupe alcoxy dérivé d'un alcool primaire ou secondaire comportant 1 à 4 atome(s) de carbone,
$R^2$ = reste alcoyle et/ou phényle,
a = 1 à 1,5,
b = 0,1 à 0,8),

avec un polyol A2, la réaction s'effectuant selon un rapport quantitatif tel qu'à un groupe $SiOR^1$ correspond à peu près un groupe COH et la réaction étant interrompue lors-qu'on atteint un taux de réaction de 25 à 90 %, et le polysiloxane linéaire réactif B répond à la formule générale

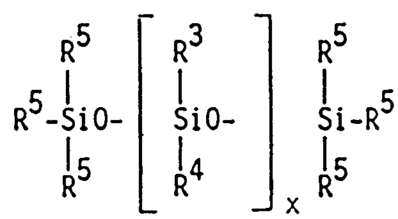

($R^3$, $R^4$ qui sont identiques ou différents, représentent un reste méthyle ou phényle, 80 % en moles de ces restes étant toutefois des restes méthyle,
$R^5$ qui sont identiques ou différents, représentent des restes alcoyle comportant 1 à 4 atome(s) de carbone et/ou des restes phényle et/ou des groupes capables de réagir avec les groupes $SiOR^1$ ou COH du polysiloxane modifié A, au moins un reste $R^5$ représentant un tel groupe capable de réagir,
x $\geqq 0$),

caractérisée en ce qu'on utilise comme polyol A2, un polyol contenant des groupes esters, répondant à la formule générale

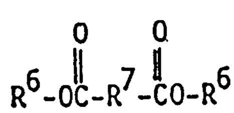

qu'on obtient par estérification d'1 mole d'acide dicarboxylique $HOOC\text{-}R^7\text{-}COOH$ avec 2 moles d'un alcool de formule $R^6OH$, les restes $R^6$ de la molécule étant identiques ou différents et représentant le groupe

$HO(CH_2)_2$-, 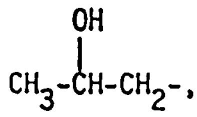, $HO(CH_2)_3$-, 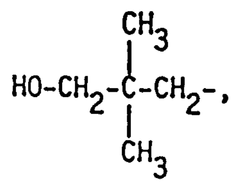, $(HOCH_2)_3C-CH_2$-,

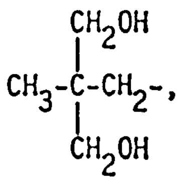, 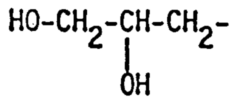 ou 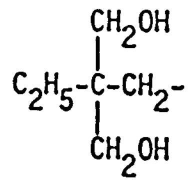

formule dans laquelle

$R^7$ représente un groupe alcoylène, cycloalcoylène ou phény-lène, et le polyol contenant des groupes esters doit comporter au moins trois groupes hydroxyles.

**2.** Procédé selon la revendication 1, caractérisé en ce qu'on utilise une composition dans laquelle les restes

$R^1$ sont des restes éthyle,

$R^2$ sont des restes méthyle et/ou éthyle,

$R^6$ sont des restes

$HO(CH_2)_2$-, 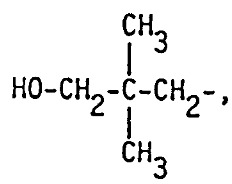, 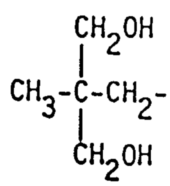 ou

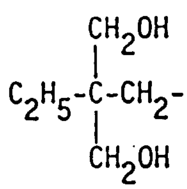

$R^7$ sont des restes phénylène.